Europäisches Patentamt

European Patent Office

Office européen des brevets

(19)

(11) **EP 0 709 572 B1**

(12) **FASCICULE DE BREVET EUROPEEN**

(45) Date de publication et mention
de la délivrance du brevet:
**25.08.1999 Bulletin 1999/34**

(51) Int Cl.6: **F04B 11/00**, F04B 13/02,
F04B 49/06

(21) Numéro de dépôt: **95402383.4**

(22) Date de dépôt: **25.10.1995**

(54) **Système de pompage à pistons délivrant des fluides avec un débit sensiblement constant**

Pumpensystem mit Verdrängerkolben zur Förderung von einem Fluidum mit konstantem Durchfluss

Pumping system with pistons displacing fluids at a constant flow rate

(84) Etats contractants désignés:
**BE DE GB IT NL**

(30) Priorité: **26.10.1994 FR 9412936**

(43) Date de publication de la demande:
**01.05.1996 Bulletin 1996/18**

(73) Titulaires:
• **Couillard, François**
**F-56450 Noyalo (FR)**
• **INSTITUT FRANCAIS DU PETROLE**
**92500 Rueil Malmaison (FR)**

(72) Inventeurs:
• **Couillard, François**
**F-56450 Noyalo (FR)**

• **Garnier, Dominique**
**F-78630 Orgeval (FR)**

(74) Mandataire: **Andreeff, François et al**
**Département Brevets,**
**Institut Français du Petrole,**
**1 & 4 avenue de Bois-Préau**
**92852 Rueil Malmaison (FR)**

(56) Documents cités:
**EP-A- 0 303 220          EP-A- 0 309 596**
**DE-A- 2 217 020          DE-A- 2 725 464**
**US-A- 3 704 080          US-A- 5 330 327**

## Description

La présente invention concerne un système de pompage à action contrôlée délivrant des fluides sous pression avec un débit sensiblement constant, utilisable notamment pour l'injection de fluides dans des installations de chromatographie en phase liquide.

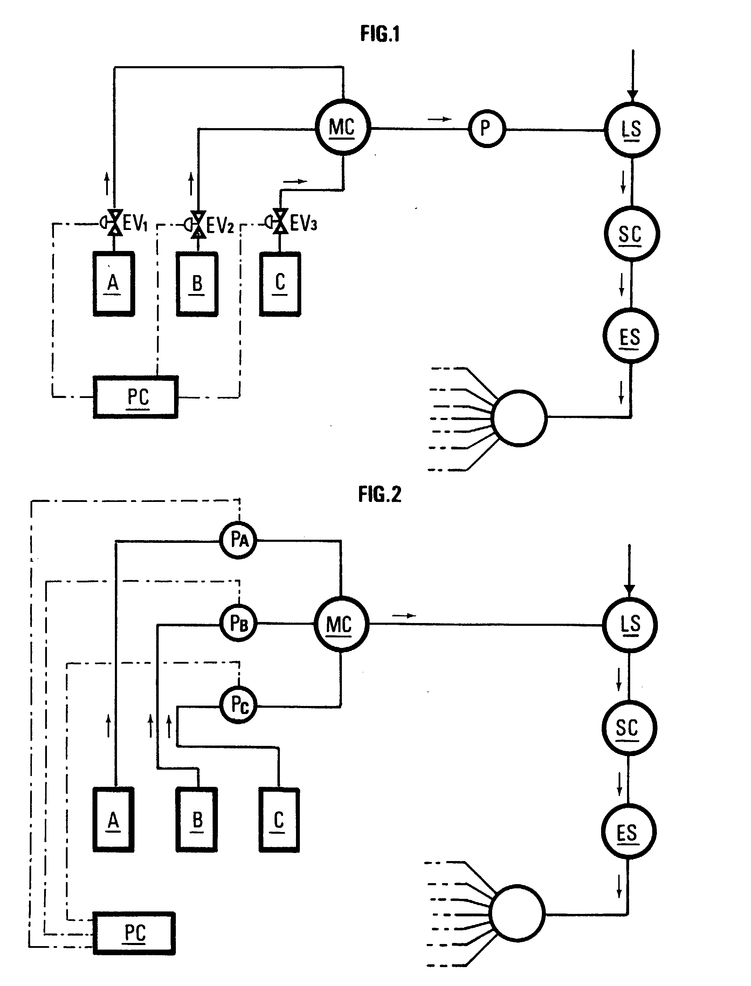

Les installations de chromatographie en phase liquide comportent généralement une ou plusieurs pompes. Elles aspirent hors de réservoirs, une "phase mobile" constituée de solvants ou de mélanges de solvants, et les refoulent dans une colonne de séparation SC (Fig.1, 2) remplie d'un matériau en poudre appelé "phase fixe" où l'on fait passer un mélange liquide ou échantillon, qu'il s'agit de séparer (chromatographie analytique) ou bien de purifier (chromatographie préparative) par l'intermédiaire d'un injecteur LS. Les débits mis en jeu peuvent varier selon les cas de quelques microlitres/minute jusqu'à plusieurs dizaines de litres/minute. Les pressions qui y règnent peuvent varier de 0,1 M.Pascal à plusieurs dizaines de MPa. A l'intérieur de la colonne, une compétition s'établit pour l'échantillon entre la phase fixe et la phase mobile. Les composants de l'échantillon sont plus ou moins retenus par la phase fixe en fonction de leurs structures moléculaires (l'importance du phénomène étant caractérisé par un temps dit de rétention), et des conditions de chromatographie: type de phases fixe et mobile utilisées, débit etc.

Un détecteur approprié ES indique le passage des éluats issus de la colonne. En chromatographie analytique, les indications du détecteur, fournissent un résultat quantitatif par la mesure des aires des pics de signal détectés, et qualitatif, par la mesure des temps de rétention. En chromatographie préparative, les données fournies par le capteur, indiquent qualitativement à un opérateur, le bon moment pour ouvrir les vanne sde collecte afin de récupérer les éluats recherchés à l'aide du collecteur.

Le principe de fonctionnement qui vient d'être défini, est celui d'un chromatographe fonctionnant en mode dit "isochratique" Il correspond au cas où la composition de la phase mobile est constante durant toute la durée de la séparation. Il existe aussi un mode de fonctionnement dit à "gradient d'élution" qui correspond aux cas plus complexes où il est nécessaire de faire varier la composition de la phase mobile durant la séparation pour obtenir le résultat recherché.

Pour les opérations de chromatographie liquide, on utilise soit des systèmes de pompage dits "à basse pression" ou "à gradient amont", soit des systèmes de pompage dits à "haute pression" ou à "gradient aval".

Dans un système de pompage dit à "basse pression", tel que schématisé à la Fig.1, on utilise une pompe unique P dont l'entrée est reliée à une chambre de mélange MC. Les réservoirs contenant les solvants A, B, C sont reliés à cette chambre de mélange MC par l'intermédiaire d'électro-vannes EV1, EV2, EV3 des solvants A, B, C. Un ensemble de commande PC associé règle l'ouverture des électrovannes une à une en respectant des rapports prédéfinis entre leurs temps d'ouverture respectifs en fonction des rapports de concentration souhaités entre les solvants injectés. Le passage des éluats issu de la colonne SC est détecté par un détecteur ES.

Les sytèmes de ce type présentent l'avantage de fonctionner avec une seule pompe mais ils présentent également un défaut gênant inhérent à leur mode de fonctionnement. A l'ouverture de chaque électro-vanne (EV2, EV3 par exemple), le solvant dans le canal d'amenée issu du réservoir, est empêché par son inertie de suivre instantanément la forte accélération qui lui est appliquée par l'aspiration de la pompe. Il se produit une cavitation génératrice de bulles. Il en résulte que le mélange effectué perd de sa précision et que le débit instantané est sujet à des variations selon la proportion de gaz mêlé au liquide à chaque instant. Ces effets sont amplifiés si l'on effectue un mélange de solvants qui réagissent l'un sur l'autre en produisant du gaz.

Dans un système de pompage dit à "haute pression", tel que schématisé à la Fig.2, on utilise une pompe par solvant et on connecte les sorties de toutes les pompes en parallèle PA, PB, PC à une chambre de mélange de type dynamique MC. Le mélange des solvants est dans le rapport des débits de chaque pompe. Comme les mélanges sont réalisés sous haute pression, on évite le plus souvent toute formation de bulles et on dose facilement les proportions de chaque constituant en contrôlant le débit de chaque pompe. Un inconvénient notable de ce type de pompe est sa dynamique de fonctionnement réduite comparativement à celle obtenue en "basse pression". Leur débit dépend en effet largement de la pression de sortie et leur dynamique de débit est réduite dans un rapport de 5 à 10, si bien que les gradients obtenus manquent de précision.

Les pompes utilisées comportent généralement un ou plusieurs pistons déplacés alternativement dans des corps de pompe par des moyens moteurs. Les pistons peuvent être en contact avec des cames rotatives. On joue sur le profil des cames, leur excentrement et/ou leur vitesse d'entraînement pour faire varier le débit des liquides pompés. Les pistons peuvent aussi être en contact avec des écrous par l'intermédiaire de billes, ces écrous étant déplacés alternativement au moyen de vis sans fin. Un ou plusieurs moteurs à courant continu ou pas-à-pas, pilotés par un micro-calculateur, les entraînent en rotation.

Les brevets EP 40.161, EP 194.450 ou EP 309.596 par exemple, décrivent des pompes pour des applications à la chromatographie en phase liquide, et des modes de réalisation où une pompe peut être associée à un système d'électro-vannes pour obtenir des gradients d'élution, avec plusieurs solvants.

Par le brevet DE 22 17 020, on connait un système de pompage comportant plusieurs pompes primaires refoulant des fluides vers un mélangeur par l'intermédiaire d'une canalisation 9, utilisant comme régulateurs de débit deux pulsateurs sans clapets en série avec des fréquences et des phases de pulsation choisies.

Par le brevet DE 27 25 464, on connait un système de pompage présentant la combinaison en série sur un même conduit, séparées l'une de l'autre par un clapet, d'une pompe principale unique et d'au moins une pompe auxiliaire convenablement déphasée par rapport à la pompe principale de façon à compenser des pulsation d'un fluide unique entraîné par ce système de pompage.

Par les brevets US 3 704 080 et EP 0 303 220, on connaît également des systèmes de pompage pour déplacer un fluide avec un débit sensiblement constant comportant des unités de pompage à mouvement alternatif interconnectées et mues avec des déphasages appropriées les unes par rapport aux autres.

Le système de pompage selon l'invention est du type modulaire. Il permet, par une combinaison d'unités de pompage, d'obtenir une grande variété de configurations facilement modifiables dont les caractéristiques de fonctionnement peuvent être modifiées à volonté sans intervention sur la structure même de leurs moyens d'entraînement.

Le système de pompage selon l'invention est réalisé à partir de moyens de pompage primaire de fluide à mouvement alternatif et de moyens de pompage secondaire à mouvement alternatif, les moyens de pompage fonctionnant par déplacement alternatif de pistons coulissant de façon étanche clans des corps de pompe, sous l'action de dispositifs de déplacement alternatif réglables, avec chacun une phase d'aspiration et une phase de refoulement, les moyens de pompage secondaire étant actionnés avec des déphasages par rapport aux moyens de pompage primaire de façon à aspirer par intermittence une fraction du fluide refoulé par eux, et à refouler ensuite cette fraction avec un vitesse sensiblement constante clans une canalisation de sortie, et des clapets unidirectionnels pour séparer les moyens de pompage. Il est caractérisé en ce qu'il comporte une tête de collecte commune, les moyens de pompage primaire comportent plusieurs modules de pompage primaire incluant chacun au moins une unité de pompage primaire, ces modules sont connectés respectivement à plusieurs réservoirs différents de fluides par l'intermédiaire de premiers clapets uni-directionnels et adaptés à refouler dans la tête de collecte commun les différents fluides aspirés par l'intermédiaire de deuxièmes clapets uni-directionnels, et les moyens de pompage secondaire comprennent au moins une pompe secondaire adaptée à aspirer par intermittence dans la tête de collecte commune, une fraction des fluides issus des différents modules de pompage primaire, et le dispositif de déplacement des pistons des différents moyens de pompage est adapté :

- pour que la somme des volumes balayés par les pistons des différents modules de pompage primaire reste constamment égale au volume balayé par l'unité de pompage secondaire, et
- pour appliquer en permanence au piston de la pompe secondaire unique (S) une loi de déplacement g(t) telle que la somme des vitesses de déplacement des pistons des différentes unités de pompage primaire et de la vitesse du piston de l'unité de pompage secondaire soit constante au moins durant les intervalles de temps d'ouverture des deuxièmes clapets uni-directionnels.

Suivant un mode de réalisation, chaque module de pompage primaire comporte en outre une deuxième unité de pompage disposée en amont de la première unité de pompage primaire, le dispositif de déplacement alternatif de cette deuxième unité de pompage primaire étant adapté à lui donner un débit sensiblement constant à l'aspiration.

De préférence, les dispositifs de déplacement alternatif de chaque première unité de pompage primaire sont adaptés à précomprimer le fluide aspiré par celle-ci avant le début de chacune de ses phases de refoulement.

Suivant un mode de réalisation, les dispositifs de déplacenient alternatif de chaque unité de pompage comportent par exemple un écrou ou bague filetée et une tige filetée, des moyens moteurs pour translater l'écrou ou la bague alternativement dans un sens et dans le sens opposé, relativement à la tige filetée, en entraînant le piston de l'unité de pompage, et un ensemble de pilotage adapté à commander les déplacements des unités de pompage pour que le volume total de fluide pénétrant dans la tête de collecte à chaque refoulement des unités primaires, soit sensiblement le double du volume aspiré par le piston de l'unité secondaire.

Les dispositifs de déplacement alternatif de chaque unité de pompage peuvent aussi comporter des cames à excentrement ajustable entraînées en rotation par un moteur, les excentrements des cames étant choisis pour que le volume total de fluide pénétrant dans la tête de collecte à chaque refoulement des unités de pompage primaires. soit sensiblement le double du volume aspiré par le piston de l'unité secondaire.

L'ensemble de pilotage comporte par exemple des moyens de mesure de la pression dans chaque unité de pompage, des moyens de détection de la position de chaque piston des différentes unités de pompage et un micro-calculateur connecté aux moyens de mesure et aux moyens de détection. qui est programmé pour déplacer les différents pistons, de façon à obtenir un débit de refoulement constant, adapté au nombre de modules primaires débouchant dans la tète de collecte.

L'ensemble de pilotage peut comporter un module d'interface pour l'acquisition des signaux de mesure délivrés par les moyens de mesure et les moyens de détection, et un module d'interface pour la commande du dispositif de déplacement des différents pistons.

Suivant un mode de réalisation, le système de pompage comporte au moins deux modules de pompage primaire connectés en parallèle à l'entrée de la tête de collecte, chacun d'eux comportant au moins une unité de pompage, l'ensemble de pilotage étant programmé pour déplacer les pistons de chacun des modules de pompage primaire de façon à obtenir une proportion déterminée de chacun des fluides dans le mélange de fluide à débit constant expulsé de la tête de collecte.

L'ensemble de pilotage peut aussi être programmé pour doser le volume de fluide aspiré à débit constant par le deuxième module primaire de chaque module de pompage primaire.

Suivant un mode de réalisation, les moyens moteurs de chaque unité de pompage comportent un moteur électrique commandé par le micro-calculateur par l'intermédiaire d'un module d'interface, un écrou solidaire du rotor du moteur, et une tige filetée en appui sur le piston de cette unité par l'intermédiaire d'une butée à bille.

Chaque unité de pompage peut comporter deux pistons fonctionnant en opposition et des moyens pour les entraîner ensemble ou separément de façon à accroître la fiabilité du système de pompage.

De préférence, le dispositif de déplacement alternatif des moyens de pompage est adapté à maintenir constante l'accélération appliquée aux différents pistons durant les phases d'aspiration.

De préférence, les dispositifs de déplacement alternatifs des moyens de pompage sont adaptés à maintenir constante l'accélération appliquée aux différents pistons durant les phases d'aspiration.

Le système selon l'invention permet d'obtenir une très grande stabilité dans le débit au refoulement et dans certains cas à l'aspiration, ainsi que dans le mélange avec dosage précis de fluides issus en parallèle de plusieurs réservoirs. Il est facile à mettre en oeuvre du fait que les diagrammes de déplacements des différents pistons peuvent être commandés avec précision par voie logicielle.

Pour la même raison, les modifications du régime de fonctionnement, nécessitées par un changement de la configuration de modules de pompage en série ou en série/parallèle du système de pompage, sont faciles à mettre en place.

Le contrôle précis des translations des pistons, permet en outre d'éviter les effets transitoires dus à de trop fortes accélérations en phase d'aspiration et donc d'éviter la formation des bulles de gaz.

Comme les fluides sont mélangés à haute pression dans la tête de collecte, on évite l'apparition de bulles résultant d'une réaction physico-chimique entre eux.

D'autres caractéristiques et avantages du système de pompage selon l'invention, apparaîtront à la lecture de la description ci-après de modes de réalisation décrits à titre d'exemples non limitatifs, en se référant aux dessins annexés où :

- la Fig.1 montre un exemple de système d'un type connu, de pompage dit à basse pression;
- la Fig.2 montre exemple de système d'un type connu, de pompage dit à haute pression;
- la Fig.3 montre un élément de pompage à piston alternatif animé par la rotation d'une vis à bille;
- la Fig.4 montre un élément de pompage analogue entraîné par la rotation d'une came;
- la Fig.5 montre un premier mode de réalisation du système de pompage selon l'invention utilisant des vis à billes pour déplacer les pistons, avec une tête de mixage à une seule entrée;
- la Fig.6 montre un autre mode de réalisation où le module de pompage comporte deux modules de pompage primaire en série;
- la Fig.7 montre schématiquement un mode de mise en oeuvre du système comportant plusieurs unités de pompage primaire en parallèle sur une même tête de mixage;
- la Fig.8 montre un deuxième mode de mise en oeuvre du système de pompage analogue à celui de la Fig.7, où l'on utilise des cames pour mouvoir les pistons;
- les Fig.9A, 9B, montrent schématiquement, en relation avec la Fig.5, comment varient les amplitudes respectives de déplacement f(x), g(x) des pistons primaire et secondaire au cours d'un cycle de pompage dans le cas d'un seul module de pompage primaire;
- les Fig.10A, 10B, 10C montrent schématiquement, en relation avec la Fig.6, comment varient les amplitudes respectives de déplacement des pistons primaires et secondaire f(x), g(x), h(x), dans le mode de réalisation de la Fig.6 avec deux unités primaires en série;
- la Fig.11A, 11B montrent schématiquement, en relation avec la Fig.7 comment varient les amplitudes respectives de déplacement f(x), g(x) des pistons des différents modules primaires en parallèle et du module secondaire au cours d'un cycle de pompage;
- la Fig.12 montre schématiquement le système selon l'invention avec son ensemble de pilotage adapté à un mode de mise en en eouvre; et
- la Fig. 13 montre un mode d'interconnexion d'unités de pompage en série et/ou parallèle; et
- les Fig.14A, 14B, 14C montrent les diagrammes correspondants obtenus par pilotage des pistons primaires et secondaires.

Le système de pompage selon l'invention est constitué à partir de modules de pompage.

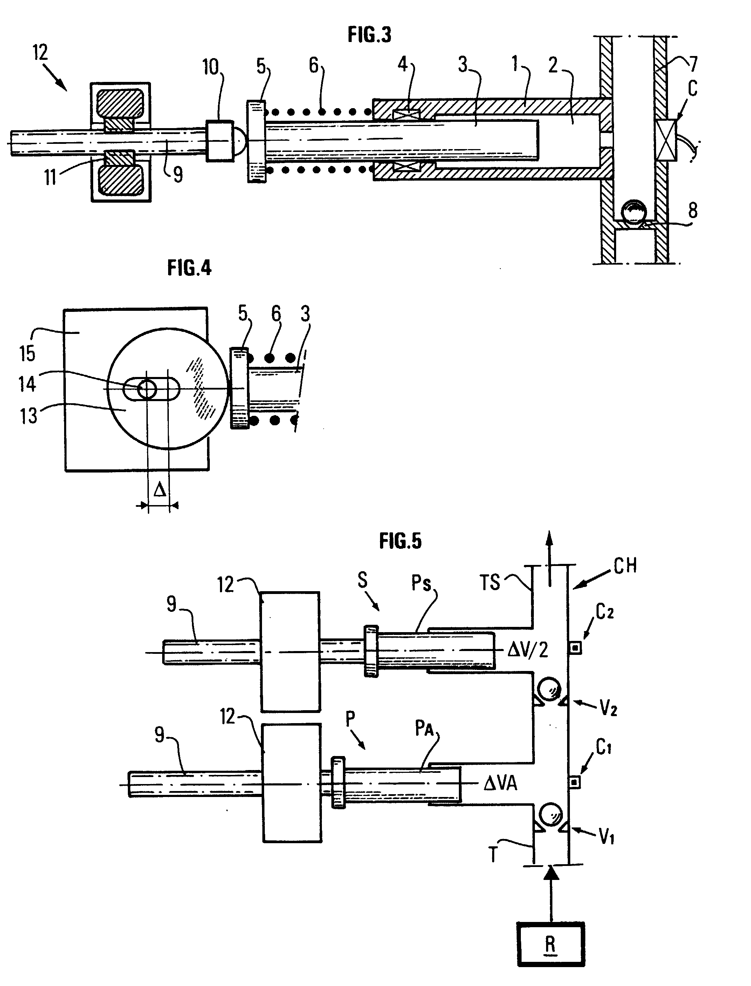

Chaque module de pompage comporte (Fig.3, 4) un corps de pompe 1 pourvu d'une cavité intérieure cylindrique 2. Par une ouverture dans le fond du corps, une tige 3 est engagée partiellement dans la cavité intérieure 2. Des moyens d'étanchéité 4 disposés autour de la tige, isolent la cavité intérieure. La tige 3 est pourvue d'une tête 5. Un ressort 6 est disposé entre elle et l'extrémité du corps, de façon à exercer sur le piston une force d'extraction permanente.

A son extrémité opposée, la cavité intérieure 2 communique avec un conduit 7 pourvu d'un clapet unidirectionnel 8 s'ouvrant durant la phase d'aspiration où la tige 3 recule, tel qu'un clapet à bille par exemple. Un capteur de pression C est disposé par exemple dans le conduit 7 en aval du clapet 8.

Suivant un premier mode de réalisation (Fig.3), l'enfoncement plus ou moins grand de la tige 3 dans la cavité intérieure 2, est assuré par la translation d'une vis sans fin 9 en appui sur la tête 5 par l'intermédiaire d'une butée à bille 10. Les moyens de translation de la vis comportent par exemple un écrou 11 adapté à la vis 9, qui est logé par exemple dans le rotor creux d'un moteur électrique 12 fixe et entraîné par lui en rotation. On change le sens de translation de la vis en intervertissant le sens de rotation du moteur à chaque demi-cycle de pompage.

Suivant un deuxième mode de réalisation (Fig.4), l'enfoncement plus ou moins grand de la tige 3 dans la cavité intérieure 2, est assuré par la rotation d'une came 13 en appui contre la tête 5, dont l'axe 14 est entraîné en rotation par un moteur 15. L'enfoncement plus ou moins grand de la tige dans la cavité cylindrique 2 est obtenu en changeant l'excentrement d de la came sur son axe.

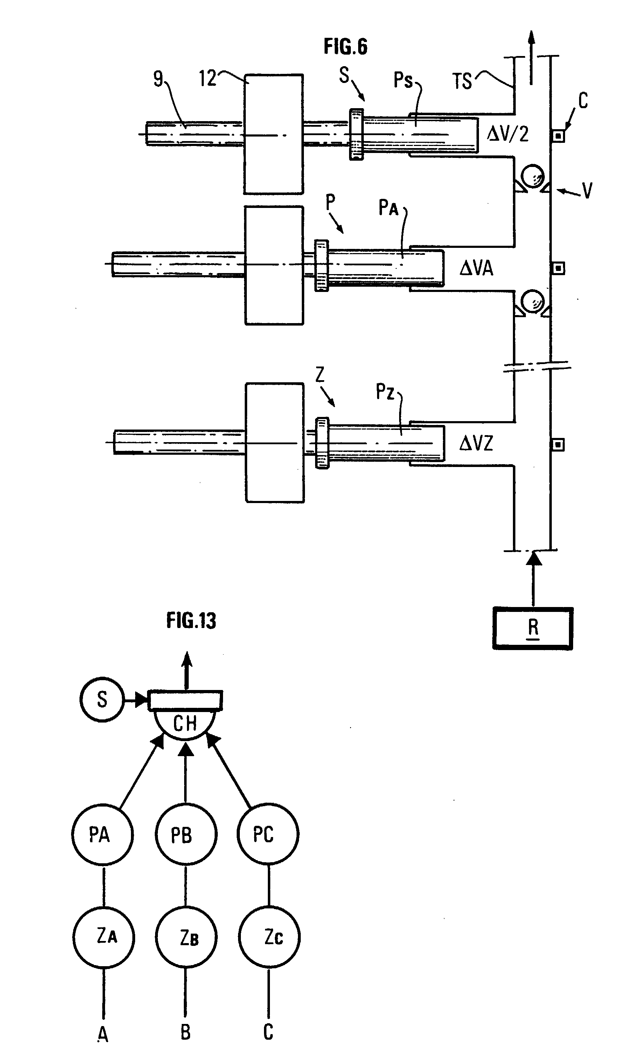

Le système de pompage selon l'invention comporte au moins une unité de pompage constituée par l'interconnexion en série d'un module de pompage primaire constitué d'au moins une pompe primaire P (Fig.5) ou de deux pompes primaires en série (Fig.6), avec une pompe secondaire S déphasée par rapport à la pompe primaire. Le module primaire communique avec un réservoir R de fluide à pomper tel qu'un solvant, par un conduit T sur lequel est interposé une valve unidirectionnelle anti-retour V1. En aval du module primaire, sur le même conduit, est interposée une deuxième vanne anti-retour V2 permettant l'accès du fluide dans une tête de collecte CH Le module secondaire S, dans sa phase de refoulement chasse par une canalisation TS, vers une colonne de chromatagraphie (non représentée) par exemple, le fluide aspiré dans la tête de collecte CH.

Quand le piston PA de la pompe primaire P est en phase de refoulement (la phase j variant de 0 à $\Pi$) et qu'il chasse un volume $\Delta VA$ vers la tête de collecte CH suivant une loi d'avancement $f(x)$, on commande le retrait du piston PS du module secondaire, de façon qu'il aspire un volume $\Delta VS = \Delta VA/2$, suivant une loi de recul $g(x)$, en le prélevant sur le volume refoulé par le module primaire. Le volume expulsé vers le conduit CH est donc égal à $\Delta VA/2$. Quand le piston PA du même module primaire passe en phase d'aspiration (la phase j varie de $\Pi$ à $2\Pi$) avec fermeture du clapet V2, le piston PS du module secondaire passe en phase de refoulement et expulse vers le conduit TS le volume $\Delta VS = \Delta VA/2$ précédemment aspiré.

Le débit expulsé par le conduit TS est donc constant à condition de choisir les lois de mouvement $f(x)$ et $g(x)$ de façon que la somme de leurs dérivées $f'(x) + g'(x)$ soit constante en permanence. Durant la phase de refoulement de la pompe secondaire S, entre $\Pi$ et $2\Pi$ (Fig.9A, 9B), on impose au piston PS de celui-ci un mouvement linéaire de la forme $y = a.x + b$ dont la pente est $a = f'(x) + g'(x)$, de façon à imposer un débit constant. La vitesse $f'(x)$ du piston primaire PA est considérée ici comme nulle bien qu'il soit dans une phase de recul, car l'effet qu'il aurait sur le fluide dans la canalisation CH est annulé par la fermeture du clapet V2.

Le respect de cette condition ne donne un débit constant que si l'on fonctionne avec des liquides à des pressions relativement faibles où l'on peut négliger leur compressibilité. Dans le cas contraire, on doit tenir compte que, dans la phase d'aspiration, la pression dans la chambre de la pompe primaire est sensiblement celle de la pression atmosphérique. Avant que le refoulement puisse s'amorcer, il faut élever la pression dans la chambre primaire jusqu'à la pression du module secondaire. C'est pourquoi, il est préférable de suivre la courbe d'aspiration $f2(x)$ (Fig.9A) de façon à avoir le temps d'atteindre la pression de refoulement requise quand $j= 2\Pi$.

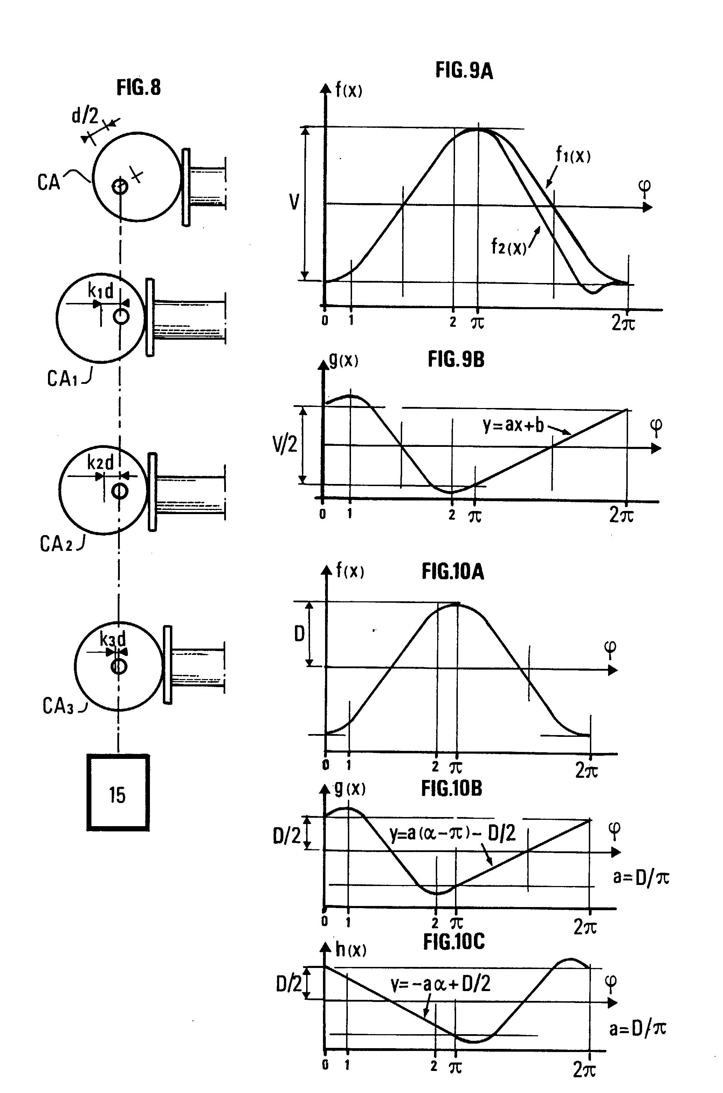

Suivant le mode de réalisation de la Fig.6, le système de pompage comporte deux pompes primaires P et Z en série sur le même conduit relié à un réservoir R. Les diagrammes de déplacement de la pompe primaire P et de la pompe secondaire S (Fig.10A, 10B) sont identiques à ceux des unités correspondantes du mode de réalisation de la Fig. 5. Ici, on commande l'unité primaire amont Z de façon que son piston se déplace linéairement entre 0 et $\Pi$, de V/2 à -V/2 et suive la même loi de variation (Fig.10C) que l'unité secondaire S entre $\Pi$ et $2\Pi$.

Ce mode de réalisation présente la particularité que son débit est également constant à l'aspiration. Il convient particulièrement pour réaliser des opérations de chromatographie sur lit mobile simulé ou quand les tubes d'aspiration sont assez longs pour que l'aspiration provoque des cavitations génératrices de bulles de gaz.

Pour prévenir encore mieux les phénomènes de cavitation à l'aspiration, on choisit la loi de mouvement $f(x)$ du piston primaire PA de façon que son accélération $f''(x)$ soit constante.

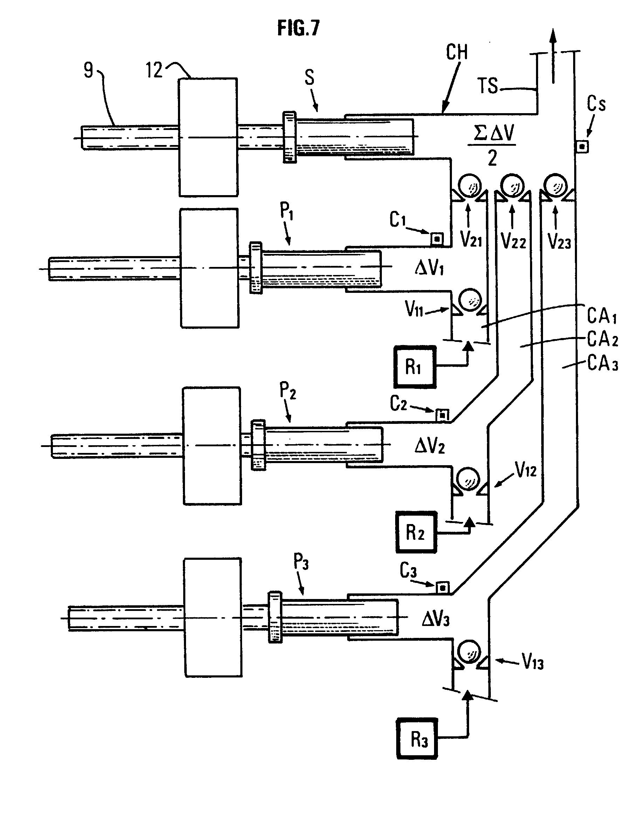

Suivant le mode de réalisation de la Fig.7, on réalise un gradient d'élution en utilisant une tête de collecte CH à plusieurs entrées. Dans l'exemple illustré, le système comporte trois modules de pompage primaire P1, P2, P3 communiquant respectivement par des conduits avec trois réservoirs R1, R2, R3 contenant trois fluides à mixer par des conduits CA1 à CA3 munis de clapets d'aspiration anti-retour V11-V13. Les conduits CA1, CA2, CA3 débouchent dans la chambre de collecte CH par l'intermédiaire de vannes anti-retour V21-V23. Le système comporte un module secondaire unique S communiquant librement avec la chambre de collecte CH.

Quel que soit leur nombre, les modules primaires P fonctionnent en phase les uns avec les autres. On peut jouer sur la proportion respective des fluides refoulés dans la chambre de collecte CH, en faisant varier la course de chacun des pistons des unités primaires P1 à P3, à condition toutefois, comme précédemment que

- la somme des trois volumes ΔV(P1), ΔV(P2) et ΔV(P3) des trois chambres primaires reste égale au double du volume ΔV(S) aspiré et refoulé par le module secondaire S, de façon que le débit du système de pompage reste sensiblement constant, et
- la somme des dérivées f'1(x), f'2(x) et f'3(x) et g(x) des lois de mouvement, reste constante en permanence., avec la même convention que la vitesse f'(x) du piston primaire P est considérée comme nulle dans sa phase de recul.

D'une façon plus générale si n (n>1) est le nombre de modules primaires et, a désignant une constante, on règle la course de variation des pistons primaires de façon que

$$\sum_n \Delta V(P_n) = \Delta V(S) \qquad (1)$$

et on veille en permanence à maintenir l'égalité :

$$g'(t) + \sum_n f_n'(t) = \bar{a} \qquad (2)$$

où f'n(t) est la vitesse de déplacement du piston de la pompe primaire Pn.

Dans ces conditions, l'unité de pompage secondaire agit toujours sur les mêmes volumes de fluide en maintenant constant le débit expulsé quelles que soient les changements éventuels de proportions des constituants que l'on a pu commander au niveau des étages primaires P.

Dans le mode de réalisation de la Fig.7, ces conditions sont réalisées en imposant à tout moment un sens et une vitesse de rotation appropriés aux différents moteurs de commande.

Dans le mode de réalisation de la Fig.8, les cames CA1-CA3, CAs associées aux différents pistons peuvent être entraînées en rotation par le même moteur 15. Pour obtenir un contrôle plus précis du mouvement alternatif à donner à chaque piston, il est préférable cependant d'associer un moteur différent à chaque came.

On règle l'excentricité des cames CA1-CA3 en fonction des taux respectifs des différents fluides à mixer et de façon que la somme des excentrements des différentes pompes primaires P1, P2, P3 par exemple, soit égale à l'excentrement d qu'aurait la came dans le cas d'utilisation d'un module primaire unique. Dans l'exemple illustré, les trois constituants sont mixés respectivement avec les taux 0,5.d, 0,35.d et 0,15.d par le réglage donné aux cames CA1-CA3.

Un mode de réalisation des cames de commande des pistons primaires, permettant d'obtenir une accélération constante en évitant ainsi les cavitations, consiste par exemple à choisir un profil de came constitué d'arcs de paraboles.

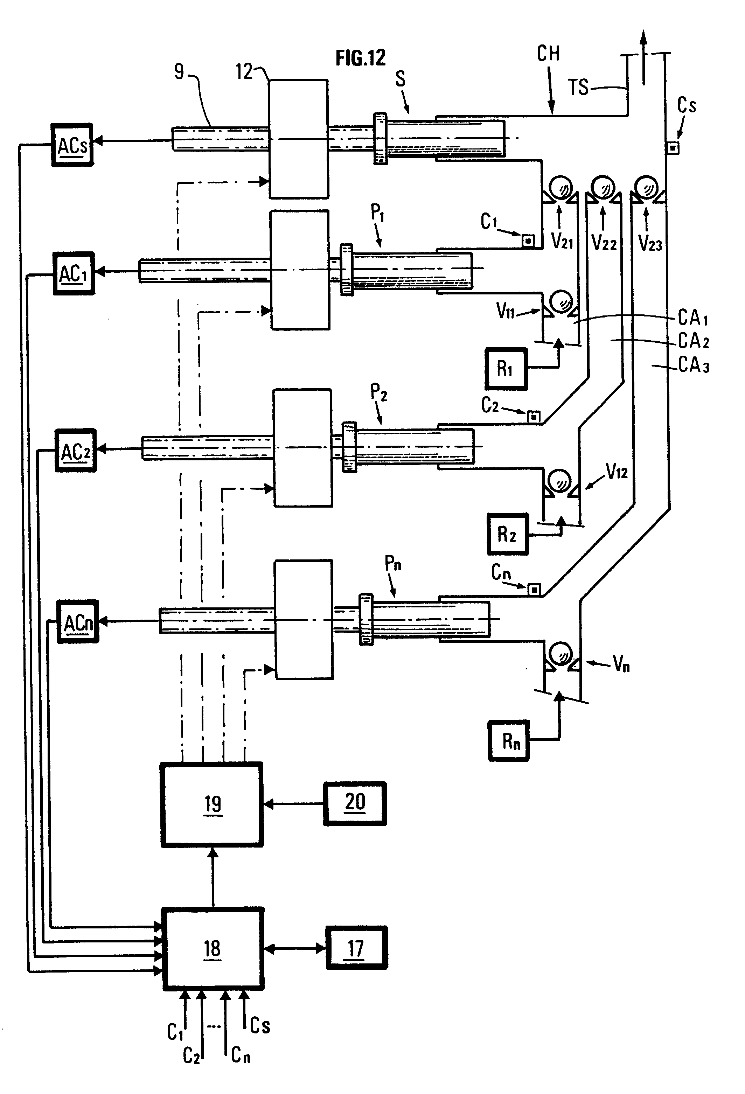

Le système de pompage (Fig.12) est commandé par un ensemble de pilotage comportant un micro-calculateur 17 pourvu d'une carte d'interface 18. Des codeurs angulaires AC1, AC2, ACn et ACs sont associés respectivement à chacun des n (n≥1) modules primaires P1 à Pn ainsi qu'au module secondaire S. Les signaux issus de ces codeurs angulaires qui sont représentatifs soit de l'angle de rotation de chaque vis et de son sens (Fig.12), soit de l'angle et du sens de rotation de chaque came dans le mode de réalisation des Fig 4 et 8, sont acquis par la carte d'interface 18 associée au micro-calculateur 17. A cette même carte 18, sont également connectés les capteurs de pression C1, C2, ..., Cn et Cs mesurant les pressions dans chacun des modules. Les moteurs électriques (des moteurs à courant continu à faible inertie ou encore des moteurs pas-à-pas) servant à l'entraînement des pistons, sont alimentés par une interface de puissance 19, elle-même connectée à un générateur électrique 20.

Le micro-calculateur 17 est programmé pour élaborer les signaux de commande définissant le sens de rotation et la vitesse de rotation de chaque moteur 12, à partir des données fournies par les codeurs angulaires AC et les capteurs de pression C, de façon à réaliser à tout instant un débit constant, en évitant les effets de cavitation éventuels, en accord avec les relations 1 et 2 et les courbes de déplacement des Fig.9, 11, 14 par exemple.

Les lois de déplacement des différents pistons primaires dans le cas où l'on doit modifier le taux de chaque constituant, peuvent être changées par une simple modification du logiciel de commande. On peut modifier donc à volonté la composition du mélange délivré sans changer ni son débit ni sa régularité.

Les unités de pompage P, S et Z précédentes, se prêtent à différentes combinaisons.

Le système de pompage de base comporte comme on l'a vu au moins un module primaire (une unité primaire P ou deux pompes primaires P et Z en série) associé à une tête de collecte CH et une pompe secondaire S (Fig.5, 6). Cette combinaison de base peut être facilement modifiée en connectant plusieurs modules primaires en parallèle sur la même tête de collecte CH.

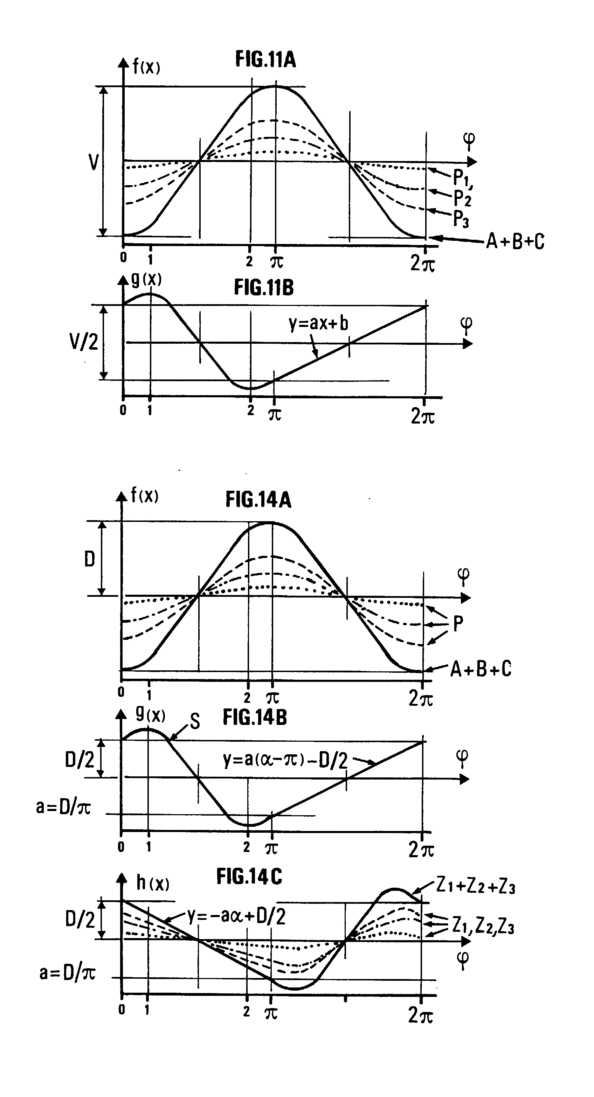

On voit par exemple que, suivant le mode de réalisation de la Fig.13 par exemple, on peut connecter sur une même tête de mixage CH plusieurs branches primaires comportant chacune deux unités de pompage primaire P et Z en série. Les modules PA, PB, PC ainsi que le module S fonctionnent (Fig.14A, 14B) de manière analogue à ceux décrits en relation avec la Fig. 7, 8. Les modules ZA, ZB et ZC sont commandés de façon à suivre les diagrammes de déplacement de la Fig. 14C. Leurs élongations respectives sont proportionnelles à l'élongation du module Z unique de la Fig.6, avec des coefficients de proportionnalité dépendant du gradient d'élution recherché.

On ne sortirait pas du cadre de l'invention en remplaçant chaque unité de pompage à piston unique par une unité à deux pistons disposés en opposition reliés à chaque moyen d'entraînement (vis/écrou ou bien came) de façon pneumatique, chacune des liaisons étant contrôlée par une électro-vanne. Un piston suffit pour entraîner l'unité de pompage. Pour des opérations de maintenance ou en cas de défaillance éventuelle, on peut intervenir sur l'un des pistons en commutant les électro-vannes.

## Revendications

1.  Système de pompage réalisé à partir de moyens de pompage primaires de fluide (P, Z) à mouvement alternatif et de moyens de pompage secondaires (S) à mouvement alternatif, les moyens de pompage fonctionnant par déplacement alternatif de pistons (3) coulissant de façon étanche dans des corps de pompe (1), sous l'action de dispositifs de déplacement alternatif réglables; avec chacun une phase d'aspiration et une phase de refoulement, les moyens de pompage secondaires (S) étant actionnés avec des déphasages par rapport aux moyens de pompage primaires de façon à aspirer par intermittence une fraction du fluide refoulé par eux, et à refouler ensuite cette fraction avec un vitesse sensiblement constante dans une canalisation de sortie (TS), et des clapets unidirectionnels (V1, V2) interposés entre les les moyens de pompage, caractérisé en ce qu'il comporte une tête de collecte commune (CH), les moyens de pompage primaire comportent plusieurs modules de pompage primaires (P, Z) incluant chacun au moins une unité de pompage primaire (P), ces modules sont connectés respectivement à plusieurs réservoirs de fluides par l'intermédiaire de premiers clapets uni-directionnels (V1) et adaptés à refouler dans la tête de collecte commune (CH) les différents fluides aspirés par l'intermédiaire de deuxièmes clapets uni-directionnels (V2), et les moyens de pompage secondaire comprennent une seule unité de pompage secondaire (S) adaptée à aspirer par intermittence dans la tête de collecte commune (CH), une fraction des fluides issus des différents modules de pompage primaire (P), et le dispositif de déplacement des pistons des différents moyens de pompage est adapté :

    -   pour que la somme des volumes balayés par les pistons des différents modules de pompage primaire reste constamment égale au volume balayé par l'unité de pompage secondaire (S), et
    -   pour appliquer en permanence au piston de la pompe secondaire unique (S) une loi de déplacement g(t) telle que la somme des vitesses de déplacement des pistons des différentes unités de pompage primaire et de la vitesse du piston de l'unité de pompage secondaire soit constante au moins durant les intervalles de temps d'ouverture des deuxièmes clapets uni-directionnels (V2).

2.  Système de pompage selon la revendication 1, caractérisé en ce que chaque module de pompage primaire comporte une première et une deuxième unité de pompage primaire (P, Z) disposées en série, chaque deuxième unité de pompage primaire (Z) étant associée à un dispositif de déplacement alternatif adapté à lui donner un débit sensiblement constant à l'aspiration.

3.  Système de pompage selon l'une des revendications 1 ou 2, caractérisé en ce que le dispositif de déplacement alternatif associé à chaque première unité de pompage primaire (P) est adapté à précomprimer le fluide aspiré par celle-ci avant le début de chacune de ses phases de refoulement.

4.  Système de pompage selon l'une des revendications précédentes, caractérisé en ce que le dispositif de déplacement alternatif associé à chaque unité de pompage primaire ou secondaire (P,Z,S) comporte un écrou ou bague filetée (11) et une tige filetée (9), des moyens moteurs (12) pour translater l'écrou ou la bague (11) alternativement dans un sens et dans le sens opposé, relativement à la tige filetée, en entraînant le piston (3), et un ensemble de pilotage (17) adapté à commander le déplacement du piston de chaque unité de pompage secondaire pour vérifier lesdites conditions a) et b).

5. Système de pompage selon l'une des revendications 1 à 3, caractérisé en ce que le dispositif de déplacement alternatif associé à chaque unité de pompage primaire ou secondaire (P, Z, S) comporte une carne (CA1,...,CAn) à excentrement ajustable entraînée en rotation par un moteur (15), les excentrements des différentes cames étant choisis pour obtenir une proportion déterminée de chacun des différents fluides dans le mélange de fluides refoulés dans la tête de collecte (CH), et un ensemble de pilotage (17) adapté à commander la rotation des carnes déplaçant les pistons des différentes unités de pompage primaire 6) pour vérifier lesdites conditions a) et b).

6. Système de pompage selon la revendication précédente, caractérisé en ce que l'ensemble de pilotage est adapté à commander les déplacements des pistons pour que le volume total des fluides issus des moyens de pompage primaire, soit sensiblement le double du volume aspiré par le piston de l'unité de pompage secondaire (S).

7. Système de pompage selon la revendication 5 ou 6, caractérisé en ce que l'ensemble de pilotage (17) comporte des moyens (C) de mesure de la pression dans chaque unité de pompage, des moyens (16) de détection de la position de chaque piston des unités de pompage et un micro-calculateur connecté aux moyens de mesure (C) et aux moyens de détection (16), programmé pour déplacer les différents pistons, de façon à obtenir un débit de refoulement constant, adapté au nombre de modules de pompage primaire.

8. Système de pompage selon la revendication précédente, caractérisé en ce que l'ensemble de pilotage (17) comporte un module d'interface (18) pour l'acquisition des signaux de mesure délivrés par les moyens de mesure (C) et les moyens de détection (16), et un module d'interface (19) pour la commande des moyens moteurs associés aux différents pistons.

9. Système de pompage selon l'une des revendications 6-8, caractérisé en ce que l'ensemble de pilotage (17) est programmé pour déplacer les pistons de chacun des modules de pompage primaire de façon à obtenir une proportion déterminée de chacun des fluides dans le mélange de fluide à débit constant délivré par le système de pompage.

10. Système de pompage selon la revendication précédente, caractérisé en ce que l'ensemble de pilotage (17) est programmé pour doser le volume de fluide aspiré à débit constant par le deuxième module primaire (Z) de chaque module de pompage primaire.

11. Système de pompage selon l'une des revendications précédentes, caractérisé en ce que chaque unité de pompage comporte deux pistons en opposition et des moyens pour les entraîner ensemble ou séparément.

12. Système de pompage selon l'une des revendications précédentes, caractérisé en ce que les dispositifs de déplacement alternatifs des moyens de pompage sont adaptés à maintenir constante l'accélération appliquée aux différents pistons durant les phases d'aspiration.

**Patentansprüche**

1. Pumpensystem aus primären Fluidpumpmitteln (P, Z) von hin- und hergehender Bewegung und sekundären Pumpmitteln (S) mit hin- und hergehender Bewegung, wobei die Pumpmittel durch alternative Verschiebung von Kolben (3) arbeiten, die dicht in Pumpenkörpern (1), unter der Wirkung von regelbaren Vorrichtungen mit alternativer Verschiebung gleiten, je mit einer Saug- und einer Förder- bzw. Verdrängerphase, wobei die sekundären Pumpmittel (S) mit Phasenverschiebungen bezüglich der primären Pumpmittel betätigt werden, derart, daß intermittierend eine Fraktion des durch sie geförderten Fluids angesaugt wird und anschließend diese Fraktion mit einer im wesentlichen konstanten Geschwindigkeit in einen Austrittskanal (TS) gefördert wird sowie Ventile mit einer Richtung (V1, V2), die zwischen den Pumpmitteln angeordnet sind, dadurch gekennzeichnet, daß es einen gemeinsamen Sammelkopf (CH) umfaßt, wobei die primären Pumpmittel mehrere primäre Pumpmodule (PZ) umfassen, die je wenigstens eine primäre Pumpeinheit (P) einschließen, diese Module jeweils mit mehreren Fluidspeichern mittels erster Ventile mit einer Richtung (V1) verbunden und so ausgelegt sind, daß sie in den gemeinsamen Sammlerkopf (CH) die verschiedenen Fluide fördern, welche vermittels zweiter Ventile mit einer Richtung (V2) angesaugt wurden und die sekundären Pumpmittel eine einzige sekundäre Pumpeinheit (S) umfassen, die so ausgelegt ist, daß sie intermittierend in den gemeinsamen Sammlerkopf (CH) eine Fraktion der aus den verschiedenen Modulen der primären Pumpeinheit (P) stammenden Fluide saugen und daß die Verschiebungseinrichtung der verschiedenen Pumpmittel so ausgelegt ist:

- daß die Summe der durch die Kolben der verschiedenen primären Pumpmittel gespülten Volumina konstant gleich dem Volumen bleibt, das durch die sekundäre Pumpeinheit (S) gespült wurde und
- daß permanent der Kolben der einzigen Sekundärpumpe (S) mit einem Verschiebungsgesetz g(t) derart beaufschlagt wird, daß die Summe der Verschiebungsgeschwindigkeiten der Kolben der unterschiedlichen primären Pumpeinheiten sowie die Geschwindigkeit der sekundären Pumpeinheit wenigstens während der Zeitintervalle des öffnens der zweiten Ventile mit einer Richtung (V2) konstant bleibt.

2. Pumpensystem nach Anspruch 1, dadurch gekennzeichnet, daß jedes primäre Pumpenmodul eine erste und eine zweite primäre Pumpeinheit (P, Z) umfaßt, die in Reihe angeordnet sind, wobei jede zweite primäre Pumpeinheit (Z) einer Vorrichtung mit Hin- und Hergang zugeordnet ist, die so ausgelegt ist, daß ihr ein beim Saugen im wesentlichen konstanter Durchsatz erteilt wird.

3. Pumpensystem nach einem der Ansprüche 1 oder 2, dadurch gekennzeichnet, daß die Vorrichtung mit der hin- und hergehenden Bewegung, zugeordnet einer ersten primären Pumpeinheit (P) so ausgelegt ist, daß sie das durch sie angesaugte Fluidvolumen vor dem Beginn jeder der Förderphasen vorkomprimiert.

4. Pumpensystem nach einem der vorhergehenden Ansprüche, dadurch gekennzeichnet, daß die Vorrichtung mit der hin- und hergehenden Bewegung, zugeordnet zu jeder primären oder sekundären Pumpeneinheit (P, Z, S) eine Mutter oder einen Gewindering (11) und eine Gewindestange (9) umfaßt, Antriebsmittel (12), um Mutter oder Ring (11) alternativ in der einen oder anderen Richtung relativ zur Gewindestange unter Mitnahme des Kolbens (3) zu versetzen und eine Regulierungseinrichtung (17), die so ausgelegt ist, daß sie die Verschiebung des Kolbens jeder sekundären Pumpeneinheit steuert, um diese Bedingungen a) und b) zu erfüllen.

5. Pumpensystem nach einem der Ansprüche 1 bis 3, dadurch gekennzeichnet, daß die Vorrichtung zur hin- und hergehenden Bewegung, zugeordnet zu jeder primären oder sekundären Pumpeneinheit (P, Z, S), eine Nocke (CA1...CAn) mit einstellbarer Exzentrizität umfaßt, die durch einen Motor (15) in Drehbewegung versetzt wird, wobei die Exzenter der verschiedenen Nocken gewählt werden, um einen bestimmten Anteil jeder der verschiedenen Fluide im Gemisch der in den Sammlerkopf (CH) verdrängten Fluide zu erhalten und eine Regulierungseinheit (17), die so ausgelegt ist, daß sie die Drehung der Nocken steuert, welche die Kolben der verschiedenen primären Pumpeneinheiten (9) verschieben, um diese Bedingungen a) und b) zu erfüllen.

6. Pumpensystem nach dem vorhergehenden Anspruch, dadurch gekennzeichnet, daß die Regulierungsanordnung so ausgelegt ist, daß sie die Verschiebungen der Kolben derart steuert, daß das Gesamtvolumen der aus den primären Pumpenmitteln stammenden Fluide im wesentlichen gleich dem Doppelten des durch den Kolben der sekundären Pumpeneinheit (S) angesaugten Volumens ist.

7. Pumpensystem nach Anspruch 5 oder 6, dadurch gekennzeichnet, daß die Regulierungsanordnung (17) Mittel (C) zum Messen des Drucks in jeder Pumpeinheit umfaßt, Mittel (16) zur Erfassung der Position jedes Kolbens der Pumpeinheiten sowie einen Mikrorechner, der mit den Meßmitteln (C) und mit den Erfassungsmitteln (16) verbunden ist, derart programmiert, daß die verschiedenen Kolben derart verschoben werden, daß eine konstante Fördermenge erhalten wird, die auf die Anzahl von primären Pumpmodulen eingestellt ist.

8. Pumpensystem nach dem vorhergehenden Anspruch, dadurch gekennzeichnet, daß die Regulierungsanordnung (17) ein Schnittstellenmodul (18) zur Erfassung der Meßsignale umfaßt, die durch die Meßmittel (C) und die Erfassungsmittel (16) sowie ein Schnittstellenmodul (19) geliefert wurden, um den verschiedenen Kolben zugeordnete Antriebsmittel zu steuern.

9. Pumpensystem nach einem der Ansprüche 6 bis 8, dadurch gekennzeichnet, daß die Regulierungsanordnung (17) derart programmiert ist, daß sie die Kolben jedes der primären Pumpenmodule derart verschiebt, daß ein bestimmter Anteil jedes der Fluide im Fluidgemisch mit konstantem vom Pumpsystem gelieferten Durchsatz erhalten wird.

10. Pumpensystem nach dem vorhergehenden Anspruch, dadurch gekennzeichnet, daß die Regulierungsanordnung (17) derart programmiert ist, daß sie das Fluidvolumen dosiert, daß bei konstantem Durchsatz durch das zweite Primärmodul (Z) jedes primären Pumpenmoduls angesaugt wurde.

**11.** Pumpensystem nach einem der vorhergehenden Ansprüche, dadurch gekennzeichnet, daß jede Pumpeinheit zwei gegenläufige Kolben sowie Mittel umfaßt, um sie gemeinsam oder getrennt anzutreiben.

**12.** Pumpensystem nach einem der vorhergehenden Ansprüche, dadurch gekennzeichnet, daß die Mittel zur alternativen Verschiebung der Pumpenmittel so ausgelegt sind, daß sie die Beschleunigung konstant halten, die an die verschiedenen Kolben während der Saugphasen gelegt ist.

## Claims

**1.** A pumping system consisting of primary fluid pumping means (P, Z) with a reciprocating movement and secondary pumping means (S) with a reciprocating movement, the pumping means operating by alternately displacing pistons (3) sliding tightly inside pump barrels (1) under the action of controllable reciprocating displacement devices, each having a suction phase and a delivery phase, the secondary pumping means (S) being operated at phases shifted relative to the primary pumping means so as to draw in intermittently the fluid delivered thereby and then deliver this fraction at a substantially constant velocity into an outlet pipe (TS), and one-way valves (V1, V2) inserted between the pumping means, characterised in that it has a common collection head (CH), the primary pumping means having several primary pumping units (P, Z) each having at least one primary pumping unit (P), these modules being connected respectively to several tanks of fluid by means of first one-way valves (V1) and being designed to deliver the different fluids drawn in via second one-way valves (V2) into the collection head (CH) and secondary pumping means comprising a single secondary pumping unit (S) set up to draw a fraction of the fluids from the different primary pumping modules (P) intermittently into the collection head (CH), the device for displacing the pistons of the different pumping means being designed:

- so that the sum of the volumes swept by the pistons of the different primary pumping modules remains permanently equal to the volume swept by the secondary pumping unit (S) and
- in order to apply permanently to the piston of the single secondary pump (S) a law of motion g(t) such that the sum of the displacement velocities of the pistons of the different primary pumping units and the velocity of the piston of the secondary pumping unit is constant, at least during the times when the second one-way valves (V2) are open.

**2.** A pumping system as claimed in claim 1, characterised in that each primary pumping module has a first and a second primary pumping unit (P, Z) arranged in series, each second primary pumping unit (Z) being associated with a reciprocating displacement device designed to impart to it a substantially constant flow rate during suction.

**3.** A pumping system as claimed in one of claims 1 or 2, characterised in that the reciprocating displacement device associated with each first primary pumping unit (P) is designed to pre-compress the fluid drawn in thereby before the start of each of its delivery phases.

**4.** A pumping system as claimed in one of the preceding claims, characterised in that the reciprocating displacement device associated with each primary or secondary pumping unit (P, Z, S) has a threaded nut or ring (11) and a threaded rod (9), motor means (12) for displacing the nut or ring (11) in translation in a reciprocating motion in one direction and in the opposite direction relative to the threaded rod, thereby driving the piston (3), and a drive-control system (17) set up to control the displacement of the piston of each secondary pumping unit in order to comply with said conditions a) and b).

**5.** A pumping system as claimed in one of claims 1 to 3, characterised in that the reciprocating displacement device associated with each primary or secondary pumping unit (P, Z, S) has a cam (CA1,... CAn) which can be eccentrically adjusted, driven in rotation by a motor (15), the eccentric positions of the different cams being chosen to produce a given proportion of each of the different fluids in the fluid mixture delivered to the collection head (CH) and a drive-control system (17) set up to control the rotation of the cams displacing the pistons of the different primary pumping units 6) in order to comply with said conditions a) and b).

**6.** A pumping system as claimed in the preceding claim, characterised in that the drive-control system is set up to control the displacements of the pistons so that the total volume of fluids from the primary pumping means is substantially twice the volume drawn in by the piston of the secondary pumping unit (S).

**7.** A pumping system as claimed in claim 5 or 6, characterised in that the drive-control system (17) has means (C) for measuring the pressure in each pumping unit, means (16) for detecting the position of each piston of the pumping units and a micro-computer connected to the measuring means (C) and detection means (16) programmed to displace the different pistons so as to obtain a constant delivery rate, adapted to the number of primary pumping modules.

8. A pumping system as claimed in the preceding claim, characterised in that the drive-control system (17) has an interface module (18) for acquiring the measurement signals supplied by the measuring means (C) and the detection means (16) and an interface module (19) for controlling the motor means associated with the different pistons.

9. A pumping system as claimed in one of claims 6-8, characterised in that the drive-control system (17) is programmed to displace the pistons of each of the primary pumping modules so as to obtain a given proportion of each of the fluids in the fluid mixture to be delivered at constant flow rate by the pumping system.

10. A pumping system as claimed in the preceding claim, characterised in that the drive-control system (17) is programmed to meter the volume of fluid drawn in at a constant flow rate by the second primary module (Z) of each primary pumping module.

11. A pumping system as claimed in one of the preceding claims, characterised in that each pumping unit has two opposing pistons and means for driving them together or separately.

12. A pumping system as claimed in one of the preceding claims, characterised in that the reciprocating displacement devices of the pumping means are adapted to maintain the acceleration applied to the different pistons during the suction phases constant.

**FIG.1**

**FIG.2**

**FIG.3**

**FIG.4**

**FIG.5**

**FIG.6**

**FIG.13**

**FIG.7**

$$\frac{\Sigma \Delta V}{2}$$

$V_{21}$ $V_{22}$ $V_{23}$

$C_1$

$P_1$

$\Delta V_1$

$V_{11}$

$R_1$

$CA_1$
$CA_2$
$CA_3$

$C_2$

$P_2$

$\Delta V_2$

$V_{12}$

$R_2$

$C_3$

$P_3$

$\Delta V_3$

$V_{13}$

$R_3$

CH

TS

$C_S$

S

9

12

15

## FIG.8

## FIG.9A

## FIG.9B

## FIG.10A

## FIG.10B

## FIG.10C

**FIG.12**

FIG.11A

FIG.11B

FIG.14A

FIG.14B

FIG.14C